# EUROPEAN PATENT SPECIFICATION

(11) **EP 4 502 380 B1**
(45) Date of publication and mention of the grant of the patent: **21.10.2026**
(21) Application number: 24192113.9
(22) Date of filing: 31.07.2024
(51) Int. Cl.: F04B 39/10, F04B 39/12

(54) **CRANKCASE AIR VALVE STRUCTURE AND AIR COMPRESSOR**
KURBELGEHÄUSE-LUFTVENTILSTRUKTUR UND LUFTKOMPRESSOR
STRUCTURE DE SOUPAPE D'AIR DE CARTER DE VILEBREQUIN ET COMPRESSEUR D'AIR

(30) Priority: 01.08.2023 CN 202310962112
(43) Date of publication of application: 05.02.2025
(73) Proprietor: ZF Commercial Vehicle Systems (Qingdao) Co., Ltd., Qingdao 266510 (CN)
(72) Inventor: Hao, Xiucheng, QINGDAO, 266510 (CN); Yuan, Haiqiang, QINGDAO, 266510 (CN)
(74) Representative: Eisenführ Speiser

(56) References cited:
- EP-A1- 1 452 737
- US-A- 3 384 298
- US-A1- 2022 356 872
- US-A1- 2023 048 353

## Description

### Technical Field

The present invention relates to the technical field of crankcases, and in particular to a crankcase air valve structure and an air compressor.

### Background Art

In an existing crankcase air intake structure, an air intake valve plate is generally formed in an elongated shape. The air intake valve plate has one end connected to a valve plate body, and the other end that is a free end. In an air intake process, the air intake valve plate deforms under the action of a gas to allow for passage of the gas, so that the air is taken in.

It is found in a test that the existing crankcase air intake structure has the following problems. In the air intake process, the air intake valve plate deforms, causing a large stress in a connecting end, and causing a breakage in a severe case. Also, in the air intake process, the free end of the air intake valve plate rubs against an end surface of the crankcase, thus causing wear.

Therefore, how to achieve steady air intake control and improve the reliability of the crankcase air intake structure is a problem that is urgent to be solved.

US 2023/0048353 A1 describes an improved air compressor including a cylinder block having a head deck that defines a piston bore for reciprocal movement of a piston therein. The head deck further includes first and second ramped surfaces
that slope downward toward the peripheral edge of the piston bore. A valve plate is in direct contact with the upper surface of the head deck, the valve plate having a leaf valve. During an intake stroke of the piston, the leaf valve deflects downward into direct engagement with the first and second ramped surfaces.

It should be noted that information disclosed in the above background art section is only used to enhance the understanding of the background of the present invention, and therefore may include information that does not constitute the prior art known to those of ordinary skill in the art.

### Summary of the Invention

In view of this, the present invention provides a crankcase air valve structure and an air compressor, which can achieve steady air intake control and improve the reliability of the crankcase air valve structure and the air compressor.

According to an aspect, the present invention provides a crankcase air valve structure, comprising an air intake valve and a valve seat plate that are sequentially mounted on an end surface of a crankcase.

According to the invention, therein the valve seat plate is provided with at least one group of air intake holes; the air intake valve is provided with at least one valve plate, the valve plate having root portions located at two ends thereof and lug portions located between the two ends, and the valve plate being connected to a valve body of the air intake valve by means of the root portions; sidestep grooves and accommodating recesses which are in communication with a gas channel of the crankcase are provided in the end surface of the crankcase; in a non-air intake state, the valve plate covers a corresponding group of air intake holes; and in an air intake state, the lug portions abut against corresponding accommodating recesses, and the root portions are bent toward corresponding sidestep grooves.

In some embodiments, a bottom wall of each of the accommodating recesses is inclined such that a depth of the accommodating recess gradually increases from a middle portion of the accommodating recess to an edge portion of the accommodating recess close to the sidestep groove.

In some embodiments, a depth of the accommodating recess at the edge portion is greater than a thickness of the lug portions.

In some embodiments, a bottom wall of each of the accommodating recesses is inclined such that a depth of each of the sidestep grooves is gradually increases from a middle portion of the sidestep groove to an edge portion of the sidestep groove close to the accommodating recess.

In some embodiments, a slope of the bottom wall of the sidestep groove is determined according to a maximum curvature of the root portion.

In some embodiments, a width of the root portion at an end connected to the valve body is greater than a width of the root portion at an end connected to the valve plate.

In some embodiments, two ends of the valve plate are symmetrical about a center of the valve plate.

In some embodiments, the valve seat plate is provided with a plurality of groups of air intake holes; the air intake valve is provided with a plurality of valve plates, wherein root portions of two adjacent valve plates are connected by means of a connecting bridge, and each connecting bridge fits with an sidestep groove; and in the air intake state, the connecting bridge is bent toward a corresponding sidestep groove.

In some embodiments, the plurality of groups of air intake holes are symmetrical about a center of the gas channel.

In some embodiments, each group of air intake holes comprises a plurality of circular holes, wherein some adjacent circular holes of the circular holes are in communication with each other.

In some embodiments, the valve seat plate is further provided with an exhaust hole, and the air intake valve is further provided with a hollowed-out portion corresponding to the position of the exhaust hole.

According to a further aspect, the present invention provides an air compressor, which is configured with the crankcase air valve structure as described in any one of the foregoing embodiments.

Compared with the prior art, the present invention has at least the following beneficial effects.

According to the crankcase air valve structure of the present invention, the valve plate has a robust structure by virtue of the root portions of the valve plate located at the two ends, the root portions located at the two ends are both stressed in the air intake state to avoid a breakage, the root portions fit with the sidestep grooves, and the sidestep grooves not only make a space for the deformation of the root portions, but also limits the maximum deformation of the root portions, thereby further ensuring the robustness of the root portions. Further, the lug portions of the valve plate fit with the accommodating recesses, and the accommodating recesses accommodate and support the lug portions in the air intake process, so that the lug portions abut against the accommodating recesses to avoid wear.

As such, the crankcase air valve structure of the present invention can achieve steady air intake control and improve the reliability of the crankcase air valve structure and the air compressor.

It should be understood that the above general description and the following detailed description are only exemplary and explanatory, and cannot limit the present invention.

### Brief Description of the Drawings

The accompanying drawings herein, which are incorporated into and constitute a part of the description, illustrate embodiments consistent with the present invention and, together with the description, are used to explain principles of the present invention. Obviously, the accompanying drawings described below show merely some of the embodiments of the present invention, and those of ordinary skill in the art would also have obtained other accompanying drawings according to these accompanying drawings without any creative effort.
FIG. 1 shows a schematic structural exploded view of a crankcase air valve structure according to an embodiment of the present invention;
FIG. 2 shows a schematic structural top view of a valve seat plate according to an embodiment of the present invention;
FIG. 3 shows a schematic structural top view of an air intake valve according to an embodiment of the present invention;
FIG. 4 shows a schematic structural top view of a crankcase according to an embodiment of the present invention;
FIG. 5 shows a schematic view of a fitting structure between the air intake valve and the valve seat plate according to an embodiment of the present invention;
FIG. 6 shows a schematic view of a fitting structure between the air intake valve and the crankcase according to an embodiment of the present invention;
FIG. 7 shows a schematic structural cross-sectional view taken along line A-A in FIG. 4;
FIG. 8 shows a schematic structural enlarged view of part A' in FIG. 7;
FIG. 9 shows a schematic structural cross-sectional view taken along line A-A in FIG. 4; and
FIG. 10 shows a schematic structural enlarged view of part B' in FIG. 9.

### Detailed Description of Embodiments

Now exemplary implementations will be described more fully with reference to the accompanying drawings. However, the exemplary implementations can be implemented in many forms and should not be construed as being limited to the implementations set forth herein. On the contrary, these implementations are provided to make the present invention thorough and complete, and to fully convey the concept of the exemplary implementations to those skilled in the art.

The accompanying drawings are only schematic illustrations of the present invention, and are not necessarily drawn to scale. In the accompanying drawings, the same reference numerals denote the same or similar parts, and thus the repeated description thereof will be omitted. In the description of the present invention, it should be noted that the orientation or position relationship indicated by the terms such as "top", "bottom", "left" and "right" are based on the orientation or position relationship shown in the accompanying drawings for ease of describing the present invention and simplifying the description only, rather than indicating or implying that the device or element referred to must have a particular orientation or be constructed and operated in a particular orientation, and thus will not to be interpreted as limiting the present invention.

It should be noted that the embodiments of the present invention and features of the various embodiments can be combined with each other without conflict.

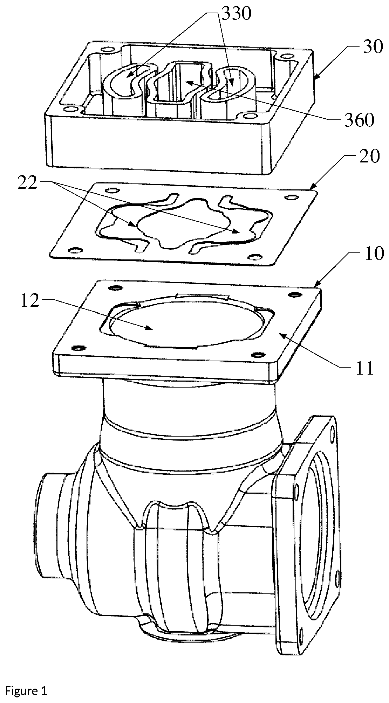

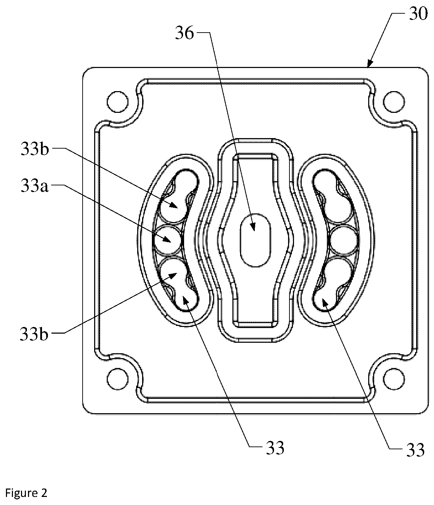

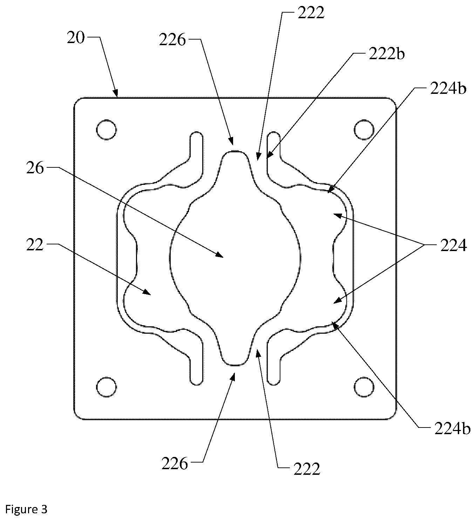

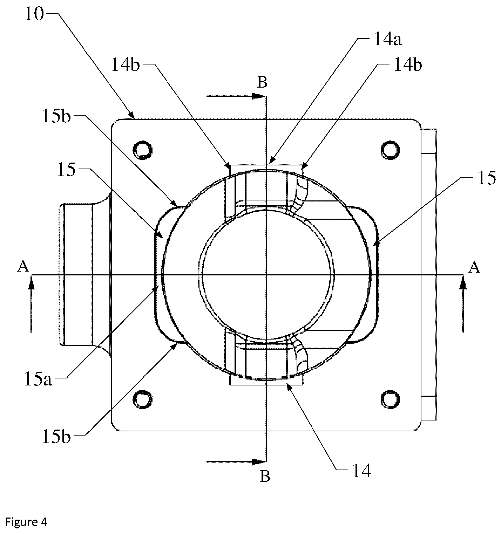

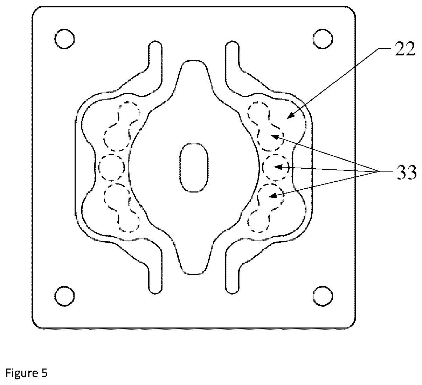

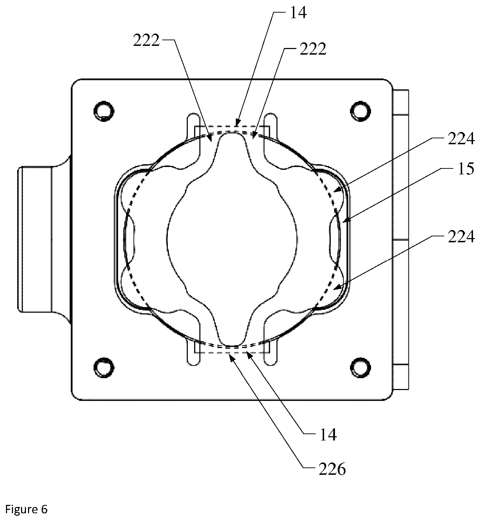

FIG. 1 shows an exploded view of a crankcase air valve structure, FIG. 2 shows a structural top view of a valve seat plate, FIG. 3 shows a structural top view of an air intake valve, FIG. 4 shows a structural top view of a crankcase, FIG. 5 shows a fitting structure between the air intake valve and the valve seat plate, and FIG. 6 shows a fitting structure between the air intake valve and the valve seat plate. With reference to FIGS. 1 to 6, the crankcase air valve structure provided in an embodiment of the present invention comprises
an air intake valve 20 and a valve seat plate 30 which are sequentially mounted on an end surface 11 of the crankcase, wherein the valve seat plate 30 is provided with at least one group of air intake holes 33; the air intake valve 20 is provided with at least one valve plate 22, the valve plate 22 having root portions 222 located at two ends thereof and lug portions 224 located between the two ends, and the valve plate 22 being connected to a valve body of the air intake valve 20 by means of the root portions 222; sidestep grooves 14 and accommodating recesses 15 which are in communication with a gas channel 12 of the crankcase 10 are provided in the end surface 11 of the crankcase;
in a non-air intake state, the valve plate 22 covers a corresponding group of air intake holes 33 (see FIG. 5); and in an air intake state, the lug portions 224 abut against corresponding accommodating recesses 15, and the root portions 222 are bent toward corresponding sidestep grooves 14 (see FIG. 6).

In the non-air intake state, the valve plate 22 covers and seals the air intake holes 33. In the air intake state, the valve plate 22 exits the air intake holes 33 under the action of a gas pressure, and is generally bent toward the gas channel 12 of the crankcase 10, such that a gas circulation channel is created between the valve plate 22 and the air intake holes 33. In this case, the root portions 222 is bent the most and undergo a large stress. By means of the design of the root portions 222 located at the two ends of the valve plate 22, the valve plate 22 has a robust structure, and the root portions 222 located at the two ends are both stressed when the valve plate 22 deforms, thus avoiding a breakage. The root portions 222 also fit with the sidestep grooves 14, the sidestep grooves 14 not only make a space for the bending deformation of the root portions 222, but also limit the maximum deformation of the root portions 222, thereby further ensuring the robustness of the root portions 222. Further, the lug portions 224 of the valve plate 22 fit with the accommodating recesses 15, and the accommodating recesses 15 accommodate and support the lug portions 224 in the air intake process, such that the lug portions 224 abut against the accommodating recesses 15 to support the valve plate 22 and avoid the wear of the lug portions 224.

In this way, the crankcase air valve structure of the present invention can achieve steady air intake control and improve the reliability of the crankcase air valve structure.

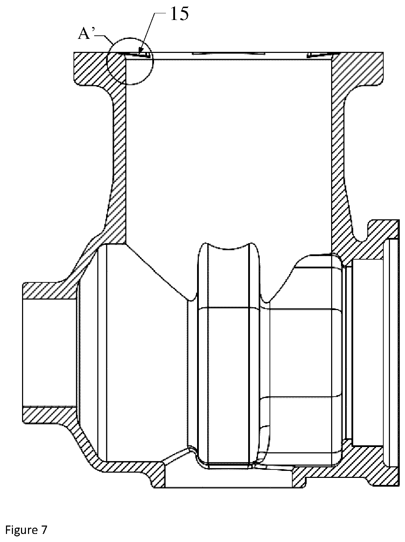

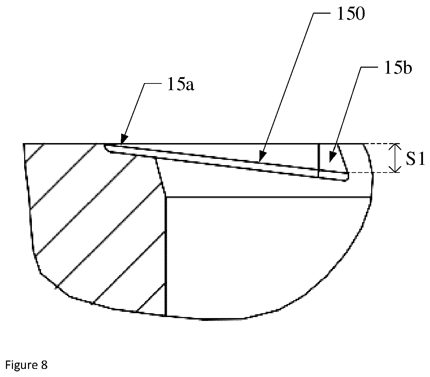

FIG. 7 shows a cross-sectional structure taken along line A-A in FIG. 4, and FIG. 8 shows an enlarged structure of part A' in FIG. 7. As shown in FIGS. 3, 4, 7 and 8, in some embodiments, a bottom wall 150 of the accommodating recess 15 is inclined such that a depth of the accommodating recess 15 gradually increases from a middle portion 15a of the accommodating recess 15 to an edge portion 15b of the accommodating recess 15 close to the sidestep groove 14. In this way, in the air intake state, on the one hand, body parts of the lug portions 224 of the valve plate 22 quickly come into contact with the bottom walls 150 of the accommodating recesses 15 for support, on the other hand, side walls of the edge portions 15b of the accommodating recesses 15 block side walls 224b of the lug portions 224 close to the root portions 222 to prevent the lug portions 224 from slipping off.

In some embodiments, a depth S1 of the accommodating recesses 15 at the edge portion 15b is greater than a thickness of the lug portions 224. In this way, it is ensured that the edge portions 15b of the accommodating recess 15 are deep enough to accommodate and block the side walls 224b of the lug portions 224.

The accommodating recesses 15 may each have a contour slightly greater than the contour of each of the lug portions 224 to adapt to the deformation trend of entire slight extension of the valve plate 22 in the air intake state under the action of the gas pressure, and in combination with the design of the inclined bottom walls 150 of the accommodating recesses 15, in the air intake state, bottom walls of the lug portions 224 abut against the bottom walls 150 of the accommodating recesses 15, and the side walls 224b of the lug portions 224 abut against the side walls of the edge portions 15b of the accommodating recesses 15, so that the entire valve plate 22 remains stable to achieve steady air intake control.

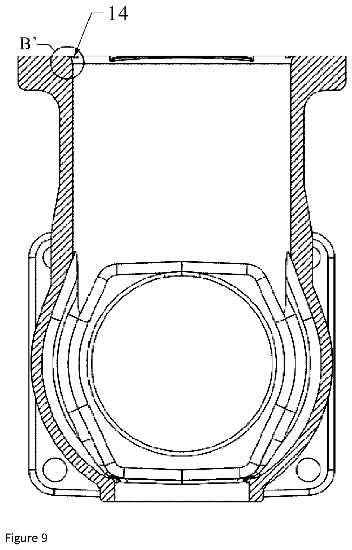

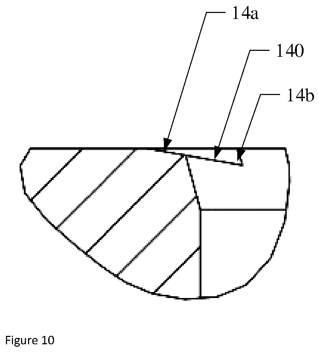

FIG. 9 shows a cross-sectional structure taken along line B-B in FIG. 4, and FIG. 10 shows an enlarged structure of part B' of FIG. 9. As shown in FIGS. 3, 4, 9 and 10, in some embodiments, the bottom wall 140 of the sidestep groove 14 is inclined such that the depth of the sidestep groove 14 is gradually increases from a middle portion 14a of the sidestep groove 14 to an edge portion 14b of the sidestep groove 14 close to the accommodating recess 15. In this way, in the air intake state, on the one hand, the body parts of the root portions 222 of the valve plate 22 quickly come into contact with the bottom walls 150 of the sidestep grooves 14 for support; on the other hand, it can be adapted to the deformation trend of entire slight extension of the valve plate 22 in the air intake state under the action of the gas pressure, and by means of the design of the inclined bottom walls 140 of the sidestep grooves 14, a sufficient space is provided for the bending and extension (that is, with slight twisting) deformation of the root portions 222.

In some embodiments, a slope of the bottom wall 140 of the sidestep groove 14 is determined according to the maximum curvature of the root portion 222. Therefore, by means of the sidestep grooves 14, the maximum deformation of the root portions 222 can be limited, and the root portions 222 can be prevented from breaking, thus ensuring the robustness of the root portions 222.

The sidestep grooves 14 may each have a contour slightly greater than the contour of each of the lug portions 222 to adapt to the deformation trend of entire slight extension of the valve plate 22 in the air intake state under the action of the gas pressure, and in combination with the design of the inclined bottom walls 140 of the sidestep grooves 14, in the air intake state, the bottom walls of the root portions 222 can abut against the bottom walls 140 of the sidestep grooves 14, and the side walls 222b of the root portions 222 close to the lug portions 224 can abut against the side walls of the edge portions 14b of the sidestep grooves 14 to prevent excessive deformation of the root portions 222, thus ensuring the robustness of the root portions 222.

With continued reference to FIGS. 1-6, in some embodiments, a width of the root portion 222 at an end connected to a valve body of the air intake valve 20 is greater than a width of the root portion 222 at an end connected to the valve plate 22. When the root portions 222 deforms, the ends of the root portions that are connected to the valve body of the air intake valve 20 undergo the greatest stress. By means of the design of the gradually varying width of the root portions 222, the ends of the root portions 222 that are connected to the valve body of the air intake valve 20 can withstand a greater stress, such that the robustness of the root portions 222 in the air intake state is ensured, and the root portions 222 are prevented from breaking.

In some embodiments, the two ends of the valve plate 22 are symmetrical about a center of the valve plate 22. The entire valve plate 22 can be formed as a symmetrical structure, so that when the valve plate 22 deforms in the air intake state, the root portions 222 located at the two ends are uniformly stressed, thus avoiding a breakage.

In some embodiments, the valve seat plate 30 is provided with a plurality of groups of air intake holes 33 (for example, the valve seat plate 30 may be provided with two groups of air intake holes 33). The air intake valve 20 is provided with a plurality of valve plates 22 (for example, the air intake valve 20 may be provided with two valve plates 22), wherein the root portions 222 of two adjacent valve plates 22 are connected by means of a connecting bridge 226, and each connecting bridge 226 fits with an sidestep groove 14. In the air intake state, the connecting bridge 226 is bent toward a corresponding sidestep groove 14.

The root portions 222 of two adjacent valve plates 22 are connected by means of the connecting bridge 226, and are then connected to the valve body of the air intake valve 20, so that the structure of the valve plates 22 can be reinforced. Each connecting bridge 226 fits with one sidestep groove 14, and the sidestep groove 14 supports and limits the bending deformation of the connecting bridge 226, so that the robustness of the connecting bridge 226 is enhanced.

Further, an existing crankcase air intake structure is generally provided with a group of air intake holes, resulting in a larger suction pressure, which is likely to cause the wear and breakage of the air intake valve plate and cause noise. In this embodiment, by means of the design of the plurality of groups of air intake holes 33 in combination with the plurality of valve plates 22, the suction pressure on each valve plate 22 can be reduced, the suction noise can be reduced, the suction efficiency can be improved, and the reliability of the crankcase air valve structure can be improved.

In some embodiments, the plurality of groups of air intake holes 33 are symmetrical about the center of the gas channel 12. In this way, the air intake is uniform throughout the gas channel 12.

In some embodiments, each group of air intake holes 33 includes a plurality of circular holes, wherein some adjacent circular holes of the circular holes are in communication with each other. For example, referring to a group of air intake holes 33 located on a left side as shown in FIG. 2, the group of air intake holes includes one circular air intake hole 33a and two peanut-shaped air intake holes 33b, and each peanut-shaped air intake hole 33b is formed by two circular air intake holes 33a in communication with each other. Some adjacent circular holes (not all) are in communication with each other, so that on the one hand, the suction area and the air intake amount are increased, and the suction efficiency is improved; and on the other hand, the noise caused by an excessively large air intake channel is avoided, and the air flow stability is ensured.

In some embodiments, each group of air intake holes 33 is symmetrical about the circular hole located in the center. In this way, the two ends of each valve plate 22 undergo a uniform gas pressure, ensuring the robustness of the valve plate 22.

In some embodiments, at least one air intake cavity 330 is provided on a side of the valve seat plate 30 facing away from the air intake valve 20, and each air intake cavity 330 is in communication with a group of air intake holes 33. By means of the air intake cavity 330, the connection of the valve seat plate 30 to other components is facilitated, and a sealed and stable air intake channel is formed.

In some embodiments, the valve seat plate 30 is further provided with an exhaust hole 36, and the air intake valve 20 is further provided with a hollowed-out portion 26 corresponding to the position of the exhaust hole 36. In this way, the exhaust from the crankcase is achieved. An exhaust cavity 360 in communication with the exhaust hole 36 is further provided on the side of the valve seat plate 30 facing away from the air intake valve 20. By means of the exhaust cavity 360, the connection of the valve seat plate 30 to other components is facilitated, and an exhaust channel is formed.

An embodiment of the present invention further provides an air compressor, and the air compressor is configured with a crankcase air valve structure as described in any one of the foregoing embodiments. The air compressor may be used in a commercial vehicle or other suitable products. The air compressor achieves steady air intake control by means of the crankcase air valve structure configured therefor, and has reduced air intake noise and higher air intake efficiency and reliability.

In summary, according to the crankcase air valve structure and the air compressor provided by the present invention, the valve plate 22 has a robust structure by virtue of the root portions 222 of the valve plate 22 located at the two ends; the root portions 222 located at the two ends are both stressed in the air intake state to avoid a breakage, the root portions 222 fit with the sidestep grooves 14, and the sidestep grooves 14 not only make a space for the deformation of the root portions 222, but also limit the maximum deformation of the root portions 222, thereby further ensuring the robustness of the root portions 222. Further, the lug portions 224 of the valve plate 22 fit with the accommodating recesses 15, and the accommodating recesses 15 accommodate and support the lug portions 224 in the air intake process, such that the lug portions 224 abut against the accommodating recesses 15 to avoid wear.

In this way, the crankcase air valve structure and the air compressor provided by the present invention can achieve steady air intake control and improve the reliability of the crankcase air valve structure and the air compressor.

The crankcase air valve structure and the air compressor provided by the present invention can also reduce the air suction pressure on each valve plate 22, reduce the suction noise, improve the suction efficiency and the reliability of the crankcase air valve structure and the air compressor by means of the plurality of groups of air intake holes 33 in combination with the plurality of valve plates 22.

The foregoings are further detailed descriptions of the present invention made with reference to specific preferred implementations, and it cannot be considered that the specific implementations of the present invention are limited to these descriptions. For those of ordinary skill in the art of the present invention, several simple deductions or substitutions can also be made without departing from the scope of the present invention, which is solely defined by the appended claims.

## Claims

1. A crankcase air valve structure, comprising an air intake valve (20) and a valve seat plate (30), which are sequentially mounted on an end surface (11) of a crankcase (10),
wherein the valve seat plate (30) is provided with at least one group of air intake holes (33); and
wherein sidestep grooves (14) and accommodating recesses (15) which are in communication with a gas channel of the crankcase (10) are provided in the end surface (11) of the crankcase (10);
**characterized in that**
the air intake valve (20) is provided with at least one valve plate (22), the valve plate (22) having root portions (222) located at two ends thereof and lug portions (224) located between the two ends, the valve plate (22) being connected to a valve body of the air intake valve (20) by means of the root portions (222);
wherein
in a non-air intake state, the valve plate (22) covers the corresponding group of air intake holes (33); and
in an air intake state, the lug portions (224) abut against the corresponding accommodating recesses (15), and the root portions (222) are bent toward the corresponding sidestep grooves (14).

2. The crankcase air valve structure of claim 1, **characterized in that** a bottom wall (150) of each of the accommodating recesses (15) is inclined such that a depth of the accommodating recess (15) gradually increases from a middle portion (15a) of the accommodating recess (15) to an edge portion (15b) of the accommodating recess (15) close to the sidestep groove (14).

3. The crankcase air valve structure of claim 2, **characterized in that** the depth (S1) of the accommodating recess (15) at the edge portion (15b) is greater than a thickness of the lug portions (224).

4. The crankcase air valve structure of claim 1, **characterized in that** a bottom wall (140) of each of the sidestep grooves (14) is inclined such that a depth of the sidestep groove (14) is gradually increases from a middle portion (14a) of the sidestep groove (14) to an edge portion (14b) of the sidestep groove (14) close to the accommodating recess (15).

5. The crankcase air valve structure of claim 4, **characterized in that** a slope of the bottom wall (140) of the sidestep groove (14) is determined according to a maximum curvature of the root portion (222).

6. The crankcase air valve structure of claim 1, **characterized in that** a width of the root portion (222) at an end connected to the valve body is greater than a width of the root portion (222) at an end connected to the valve plate (22).

7. The crankcase air valve structure of claim 1, **characterized in that** two ends of the valve plate (22) are symmetrical about a center of the valve plate (22).

8. The crankcase air valve structure of claim 1, **characterized in that** the valve seat plate (30) is provided with a plurality of groups of air intake holes (33);
the air intake valve (20) is provided with a plurality of valve plates (22), wherein root portions (222) of two adjacent valve plates (22) are connected by means of a connecting bridge (226), and each connecting bridge (226) fits with an sidestep groove (14); and
in the air intake state, the connecting bridge (226) is bent toward a corresponding sidestep groove (14).

9. The crankcase air valve structure of claim 8, **characterized in that** the plurality of groups of air intake holes (33) are symmetrical about a center of the gas channel (12).

10. The crankcase air valve structure of claim 1, **characterized in that** each group of air intake holes comprises a plurality of circular holes (33), wherein some adjacent circular holes of the circular holes are in communication with each other.

11. The crankcase air valve structure of claim 1, **characterized in that** the valve seat plate (30) is further provided with an exhaust hole (36), and the air intake valve (20) is further provided with a hollowed-out portion (26) corresponding to the position of the exhaust hole (36).

12. An air compressor, **characterized in that** the air compressor is configured with a crankcase air valve structure of any one of claims 1 to 11.

## Patentansprüche

1. Kurbelgehäuse-Luftventilstruktur, umfassend ein Luftansaugventil (20) und eine Ventilsitzplatte (30), die nacheinander an einer Stirnfläche (11) eines Kurbelgehäuses (10) montiert sind,
wobei
die Ventilsitzplatte (30) mit mindestens einer Gruppe von Luftansaugbohrungen (33) versehen ist; und
wobei in der Stirnfläche (11) des Kurbelgehäuses (10) Stufennuten (14) und Aufnahmeausnehmungen (15) vorgesehen sind, die mit einem Gaskanal des Kurbelgehäuses (10) in Verbindung stehen;
**dadurch gekennzeichnet, dass**
das Luftansaugventil (20) mit mindestens einer Ventilplatte (22) versehen ist, wobei die Ventilplatte (22) an zwei Enden davon angeordnete Fußabschnitte (222) und zwischen den beiden Enden angeordnete Nasen (224) aufweist, wobei die Ventilplatte (22) über die Fußabschnitte (222) mit einem Ventilkörper des Luftansaugventils (20) verbunden ist;
wobei
in einem Nicht-Luftansaugzustand die Ventilplatte (22) die entsprechende Gruppe von Luftansaugbohrungen (33) bedeckt; und
in einem Luftansaugzustand die Nasenabschnitte (224) an den entsprechenden Aufnahmeausnehmungen (15) anliegen und die Fußabschnitte (222) zu den entsprechenden Stufennuten (14) hin gebogen sind.

2. Kurbelgehäuse-Luftventilstruktur nach Anspruch 1, **dadurch gekennzeichnet, dass** eine Bodenwand (150) jeder der Aufnahmeausnehmungen (15) derart geneigt ist, dass eine Tiefe der Aufnahmeausnehmung (15) allmählich von einem mittleren Abschnitt (15a) der Aufnahmeausnehmung (15) zu einem Randabschnitt (15b) der Aufnahmeausnehmung (15) nahe der Stufennut (14) zunimmt.

3. Kurbelgehäuse-Luftventilstruktur nach Anspruch 2, **dadurch gekennzeichnet, dass** die Tiefe (S1) der Aufnahmeausnehmung (15) am Randabschnitt (15b) größer als eine Dicke der Nasenabschnitte (224) ist.

4. Kurbelgehäuse-Luftventilstruktur nach Anspruch 1, **dadurch gekennzeichnet, dass** eine Bodenwand (140) jeder der Stufennuten (14) derart geneigt ist, dass eine Tiefe der Stufennut (14) allmählich von einem mittleren Abschnitt (14a) der Stufennut (14) zu einem Randabschnitt (14b) der Stufennut (14) nahe der Aufnahmeausnehmung (15) zunimmt.

5. Kurbelgehäuse-Luftventilstruktur nach Anspruch 4, **dadurch gekennzeichnet, dass** eine Neigung der Bodenwand (140) der Stufennut (14) gemäß einer maximalen Krümmung des Fußabschnitts (222) bestimmt ist.

6. Kurbelgehäuse-Luftventilstruktur nach Anspruch 1, **dadurch gekennzeichnet, dass** eine Breite des Fußabschnitts (222) an einem mit dem Ventilkörper verbundenen Ende größer ist als eine Breite des Fußabschnitts (222) an einem mit der Ventilplatte (22) verbundenen Ende.

7. Kurbelgehäuse-Luftventilstruktur nach Anspruch 1, **dadurch gekennzeichnet, dass** zwei Enden der Ventilplatte (22) symmetrisch um eine Mitte der Ventilplatte (22) sind.

8. Kurbelgehäuse-Luftventilstruktur nach Anspruch 1, **dadurch gekennzeichnet, dass** die Ventilsitzplatte (30) mit mehreren Gruppen von Luftansaugbohrungen (33) versehen ist;
wobei das Luftansaugventil (20) mit mehreren Ventilplatten (22) versehen ist, wobei Fußabschnitte (222) zweier angrenzender Ventilplatten (22) über eine Verbindungsbrücke (226) verbunden sind und jede Verbindungsbrücke (226) in eine Stufennut (14) passt; und im Luftansaugzustand die Verbindungsbrücke (226) zu einer entsprechenden Stufennut (14) hin gebogen ist.

9. Kurbelgehäuse-Luftventilstruktur nach Anspruch 8, **dadurch gekennzeichnet, dass** die mehreren Gruppen von Luftansaugbohrungen (33) symmetrisch um eine Mitte des Gaskanals (12) sind.

10. Kurbelgehäuse-Luftventilstruktur nach Anspruch 1, **dadurch gekennzeichnet, dass** jede Gruppe von Luftansaugbohrungen mehrere kreisförmige Bohrungen (33) umfasst, wobei einige angrenzende kreisförmige Bohrungen der kreisförmigen Bohrungen miteinander in Verbindung stehen.

11. Kurbelgehäuse-Luftventilstruktur nach Anspruch 1, **dadurch gekennzeichnet, dass** die Ventilsitzplatte (30) ferner mit einer Auslassbohrung (36) versehen ist und das Luftansaugventil (20) ferner mit einer Aushöhlung (26) versehen ist, die der Position der Auslassbohrung (36) entspricht.

12. Luftkompressor, **dadurch gekennzeichnet, dass** der Luftkompressor mit einer Kurbelgehäuse-Luftventilstruktur nach einem der Ansprüche 1 bis 11 ausgelegt ist.

## Revendications

1. Structure de soupape d'air de carter, comprenant une soupape d'admission d'air (20) et une plaque de siège de soupape (30), qui sont séquentiellement montées sur une surface d'extrémité (11) d'un carter (10),
dans laquelle
la plaque de siège de soupape (30) est pourvue d'au moins un groupe de trous d'admission d'air (33) ; et
dans laquelle des rainures latérales (14) et des évidements de logement (15) qui sont en communication avec un canal de gaz du carter (10) sont prévues dans la surface d'extrémité (11) du carter (10) ;
**caractérisée en ce que**
la soupape d'admission d'air (20) est pourvue d'au moins une plaque de soupape (22), la plaque de soupape (22) ayant des parties pieds (222) situées à deux extrémités de celles-ci et des parties oreilles (224) situées entre les deux extrémités, la plaque de soupape (22) étant raccordée à un corps de soupape de la soupape d'admission d'air (20) au moyen des parties pieds (222) ;
dans laquelle
dans un non-état d'admission d'air, la plaque de soupape (22) couvre le groupe correspondant de trous d'admission d'air (33) ; et
dans un état d'admission d'air, les parties oreilles (224) viennent en butée contre les évidements de logement correspondants (15), et les parties pieds (222) sont courbées vers les rainures latérales correspondantes (14).

2. Structure de soupape d'air de carter de la revendication 1, **caractérisée en ce qu'**une paroi de fond (150) de chacun des évidements de logement (15) est inclinée de manière telle qu'une profondeur de l'évidement de logement (15) augmente progressivement depuis une partie médiane (15a) de l'évidement de logement (15) jusqu'à une partie de bord (15b) de l'évidement de logement (15) près de la rainure latérale (14).

3. Structure de soupape d'air de carter de la revendication 2, **caractérisée en ce que** la profondeur (S1) de l'évidement de logement (15) au niveau de la partie de bord (15b) est plus grande qu'une épaisseur des parties oreilles (224).

4. Structure de soupape d'air de carter de la revendication 1, **caractérisée en ce qu'**une paroi de fond (140) de chacune des rainures latérales (14) est inclinée de manière telle qu'un profondeur de la rainure latérale (14) augmente progressivement depuis une partie médiane (14a) de la rainure latérale (14) jusqu'à une partie de bord (14b) de la rainure latérale (14) près de l'évidement de logement (15).

5. Structure de soupape d'air de carter de la revendication 4, **caractérisée en ce qu'**une pente de la paroi de fond (140) de la rainure latérale (14) est déterminée selon une courbure maximum de la partie pied (222).

6. Structure de soupape d'air de carter de la revendication 1, **caractérisée en ce qu'**une largeur de la partie pied (222) au niveau d'une extrémité raccordée au corps de soupape est plus grande qu'une largeur de la partie pied (222) au niveau d'une extrémité raccordée à la plaque de soupape (22).

7. Structure de soupape d'air de carter de la revendication 1, **caractérisée en ce que** deux extrémités de la plaque de soupape (22) sont symétriques autour d'un centre de la plaque de soupape (22).

8. Structure de soupape d'air de carter de la revendication 1, **caractérisée en ce que** la plaque de siège de soupape (30) est pourvue d'une pluralité de groupes de trous d'admission d'air (33) ;
la soupape d'admission d'air (20) est pourvue d'une pluralité de plaques de soupape (22), dans laquelle des parties pieds (222) de deux plaques de soupape adjacentes (22) sont raccordées au moyen d'un pont de raccordement (226), et chaque pont de raccordement (226) s'ajuste avec une rainure latérale (14) ; et
dans l'état d'admission d'air, le pont de raccordement (226) est courbé vers une rainure latérale correspondante (14).

9. Structure de soupape d'air de carter de la revendication 8, **caractérisée en ce que** la pluralité de groupes de trous d'admission d'air (33) sont symétriques autour d'un centre du canal de gaz (12).

10. Structure de soupape d'air de carter de la revendication 1, **caractérisée en ce que** chaque groupe de trous d'admission d'air comprend une pluralité de trous circulaires (33), dans laquelle certains trous circulaires adjacents des trous circulaires sont en communication les uns avec les autres.

11. Structure de soupape d'air de carter de la revendication 1, **caractérisée en ce que** la plaque de siège de soupape (30) est en outre pourvue d'un trou d'évacuation (36), et la soupape d'admission d'air (20) est en outre pourvue d'une partie creusée (26) correspondant à la position du trou d'évacuation (36).

12. Compresseur d'air, **caractérisé en ce que** le compresseur d'air est configuré avec une structure de soupape d'air de carter de l'une quelconque des revendications 1 à 11.
